# EUROPÄISCHE PATENTSCHRIFT

(11) **EP 2 783 370 B1**
(45) Veröffentlichungstag und Bekanntmachung des Hinweises auf die Patenterteilung: **24.04.2019**
(21) Anmeldenummer: 12769012.1
(22) Anmeldetag: 26.09.2012
(51) Int. Cl.: G03B 42/08, G02B 26/10, G01T 1/20, G02B 27/02

(54) **VORRICHTUNG UND VERFAHREN ZUM AUSLESEN EINER SPEICHERFOLIE**
DEVICE AND METHOD FOR READING AN IMAGE STORAGE PLATE
DISPOSITIF ET PROCÉDÉ DE LECTURE D'UN ÉCRAN À MÉMOIRE

(30) Priorität: 22.11.2011 DE 102011119049
(43) Veröffentlichungstag der Anmeldung: 01.10.2014
(73) Patentinhaber: Dürr Dental SE, 74321 Bietigheim-Bissingen (DE)
(72) Erfinder: PHILIPPS, Bernd, 74199 Untergruppenbach (DE); WEBER, Michael, 71576 Burgstetten (DE); HACK, Alexander, 88400 Biberach (DE)
(74) Vertreter: Ostertag & Partner Patentanwälte mbB
(86) Internationale Anmeldenummer: PCT/EP2012/004017
(87) Internationale Veröffentlichungsnummer: WO 2013/075767

(56) Entgegenhaltungen:
- EP-A1- 0 304 060
- EP-A1- 0 446 384
- JP-A- 2008 209 466
- US-A- 4 750 045
- US-A1- 2004 256 921
- US-A1- 2009 153 932
- US-B1- 6 343 787

## Beschreibung

### HINTERGRUND DER ERFINDUNG

### 1. Gebiet der Erfindung

Die Erfindung betrifft eine Vorrichtung und ein Verfahren zum Auslesen einer belichteten Speicherfolie.

### 2. Beschreibung des Standes der Technik

In der Röntgentechnik, insbesondere in der dentalmedizinischen Röntgentechnik, werden heutzutage Speicherfolien zur Aufnahme von Röntgenbildern verwendet. Diese Speicherfolien umfassen ein Phosphormaterial, das in einer transparenten Matrix eingebettet ist. Dadurch entstehen sogenannte Speicherzentren, die durch einfallendes Röntgenlicht in angeregte metastabile Zustände gebracht werden können. Belichtet man eine solche Speicherfolie in einer Röntgenapparatur, beispielsweise zur Aufnahme des Gebisses eines Patienten, so enthält die Speicherfolie ein latentes Röntgenbild in Form von angeregten und nicht angeregten Speicherzentren.

Zum Auslesen der Speicherfolien werden diese in einer Scanvorrichtung punktweise mit Ausleselicht abgetastet, wodurch die metastabilen Zustände der angeregten Speicherzentren in einen Zustand gebracht werden, der schnell unter Abgabe von Fluoreszenzlicht relaxiert. Dieses Fluoreszenzlicht kann mit Hilfe einer Detektoreinheit erfasst werden, sodass man mit einer entsprechenden Auswerteelektronik das Röntgenbild sichtbar machen kann.

Herkömmliche Scannvorrichtungen wie z.B. ein Trommelscanner führen die Speicherfolie entlang einer zylindrischen Fläche über einen Auslesespalt. Im Inneren der Zylinderfläche ist als Ablenkeinheit ein rotierender Spiegel vorgesehen, der einen umlaufenden Auslesestrahl erzeugt. Dieser fällt durch den Auslesespalt auf die Speicherfolie und liest diese punktweise aus. Währenddessen wird die Speicherfolie mit einem mechanischen Antrieb an dem Auslesespalt vorbei geführt, sodass die gesamte Fläche der Speicherfolie erfasst wird.

Bei einem solchen Trommelscanner ist, insbesondere im zahnmedizinischen Bereich, in welchem meist kleinformatige Speicherfolien zum Einsatz kommen, nachteilig, dass die Speicherfolie nur entlang eines kleinen Bereichs des Zylinderumfangs angeordnet ist. Einen Großteil der Auslesezeit läuft der Auslesestrahl daher in einem Bereich um, an dem keine Speicherfolie vorhanden ist, sodass der Auslesestrahl im Schnitt nur während etwa 10% der Auslesezeit tatsächlich auf die Speicherfolie trifft. Dies führt zu unnötig langen Auslesezeiten.

Aus der JP 2008 209466 A ist eine Vorrichtung zum Auslesen einer belichteten Speicherfolie gemäß dem Oberbegriff des Anspruchs 1 bekannt. Bei dieser bekannten Vorrichtung wird die Speicherfolie an einem Ausleselichtstrahl vorbeigeführt, der in einer Ebene hin und her oszilliert. Diese Oszillation wird durch einen Mikrospiegel erzeugt, der um eine Achse schwingt.

Aus der EP 0 446 384 A1 ist ein Röntgendiagnostikgerät mit einem Speicherleuchtschirm zur latenten Speicherung des jeweiligen Röntgenbildes bekannt. Zur Bildwiedergabe wird der Speicherleuchtschirm Bildelement für Bildelement durch flächiges Abtasten mit einem Abtaststrahl zum Strahlen angeregt.

Aus der US 2004/0256921 A1 ist ein MEMS-Spiegel bekannt, der um eine Achse schwingen kann. Der Spiegel oszilliert dabei mit seiner Resonanzfrequenz und wird von periodisch erzeugten Schaltsignalen angeregt.

Die US 2009/0153932 A1 offenbart einen ähnlichen MEMS-Spiegel, der jedoch um zwei Achsen schwingen kann.

### ZUSAMMENFASSUNG DER ERFINDUNG

Es ist Aufgabe der Erfindung eine Vorrichtung und ein Verfahren anzugeben, bei welchen die Ausleseeffizienz verbessert ist.

Hinsichtlich der Vorrichtung wird diese Aufgabe durch eine Vorrichtung mit den Merkmalen des Anspruchs 1 gelöst.

Erfindungsgemäß wurde erkannt, dass mit einem steuerbaren Spiegel, der hin- und herschwenkbar ist, das Ausleselicht so geführt werden kann, dass dieses die meiste Zeit auf die Speicherfolie fällt. Dadurch reduziert sich die Zeit, die zum Auslesen einer Speicherfolie insgesamt benötigt wird.

Der Mikrospiegel kann insbesondere als MEMS-Mikrospiegel (MEMS: *microelectromechanical system*) ausgebildet sein. Kennzeichnend für die MEMS-Technologie ist die Integration von mechanischen Elementen, Aktuatoren und Elektronik auf einem gemeinsamen Substrat, wobei die Herstellung ähnlich wie bei Prozessoren und Speicherchips erfolgt und das Aufbringen von Materialschichten und nachfolgendes selektives Ätzen umfasst. MEMS-Mikrospiegel sind sehr zuverlässig und reagieren aufgrund ihrer geringen Masse sehr schnell auf Ansteuersignale, sodass hohe Ablenkgeschwindigkeiten erreicht werden können.

Durch eine Ablenkung um zwei Achsen kann eine flächige Speicherfolie auch ohne eine Relativbewegung zwischen der Ablenkeinheit und der Speicherfolie abgetastet werden. Die beiden Achsen sind dabei vorzugsweise parallel zu den Rändern der meist rechteckigen Speicherfolie angeordnet.

Bei einem Ausführungsbeispiel ist der Spiegel um die beiden Schwenkachsen kontinuierlich zwischen zwei Endstellungen verschwenkbar. Durch eine kontinuierliche Verschwenkbarkeit entlang der Schwenkachsen kann der Mikrospiegel eine durchgehende Abtastlinie auf der Speicherfolie abtasten.

Ferner kann eine Steuereinheit vorgesehen sein, die den Spiegel mit oder nahe seiner Eigenfrequenz schwingend ansteuert.

Ein MEMS-Mikrospiegel verfügt meist über eine kardanische Aufhängung, deren Aufhängungspunkte als Festkörpergelenke ausgebildet sind. Dadurch bildet der Mikrospiegel mit den Festkörpergelenken ein schwingfähiges System, das pro Freiheitsgrad eine Eigenfrequenz aufweist. Wird der Mikrospiegel mit oder nahe Eigenfrequenz angetrieben, so werden bei möglichst geringem energetischem Aufwand möglichst große Schwingungsamplituden erreicht.

Der Spiegel kann dabei um die beiden Schwenkachsen unterschiedliche Eigenfrequenzen aufweisen. Auf diese Weise können bei geringem energetischem Aufwand in unterschiedliche Abtastrichtungen unterschiedliche Schwingungsfrequenzen erreicht werden.

Vorzugsweise wird auf der Speicherfolie mit dem Ausleselicht ein vorgegebenes Muster abgetastet, wobei das Muster die gesamte Speicherfolie mit gleichmäßiger Dichte überdecken kann. Durch eine gleichmäßige Dichte beim Abtasten der Speicherfolie ist das Signal-Rausch-Verhältnis und die Auflösung des ausgelesenen Röntgenbildes über die gesamte Speicherfolie hinweg etwa konstant.

Wenn eine Steuereinheit den Spiegel so ansteuert, dass auf der Speicherfolie mit dem Ausleselicht eine Lissajous-Figur abgetastet wird, so lässt sich nur durch Anregen der Eigenschwingungen eine vollständige Abtastung der gesamten Speicherfolie erreichen. Dadurch wird die Ansteuerung des Spiegels erheblich vereinfacht. Insbesondere können der Mikrospiegel und die Speicherfolie dabei so zueinander angeordnet sein, dass die Lissajous-Figur sich über die Ränder der Speicherfolie hinauserstreckt. Der über einen der Ränder hinausragende Teil des Musters entspricht vorzugsweise zwischen 5% und 15% der zu diesem Rand senkrechten Abmessung der Speicherfolie.

Im Falle der Lissajous-Figuren kann die Steuereinheit den Spiegel um die beiden Schwenkachsen mit Frequenzen antreiben, die einem großen, vorzugsweise unterschiedlichen, vorzugsweise ganzzahligen Vielfachen einer Basisfrequenz entsprechen, insbesondere dem 0,5-fachen der gewünschten Zeilenzahl bzw. der Spaltenzahl des Bildes, und/oder sich von einem solchen ganzzahligen Vielfach voneinander geringfügig unterscheiden, insbesondere um etwa 10% der kleineren Frequenz. Der geringfügige Unterschied kann auch nur etwa 2% der kleineren Frequenz betragen. Beispielsweise können Frequenzen von 30 Hz und 40 Hz verwendet werden, wobei die Basisfrequenz dann 10 Hz wäre und sich ein Verhältnis von 3:4 ergibt. Unterscheiden sich die beiden Frequenzen oder Frequenzvielfachen der Lissajous-Figur geringfügig, so wird eine bewegte Lissajous-Figur abgetastet. Bewegt heißt hier eine sich ähnlich einer Schwebung verändernde Lissajous-Figur. Dadurch kann die gesamte Speicherfolie abgetastet werden. Eine andere Methode, die gesamte Speicherfolie abzutasten, besteht darin, große ganzzahlige Vielfache voneinander, insbesondere dem 0,5-fachen der gewünschten Zeilenzahl bzw. der Spaltenzahl des Bildes, zu verwenden. Groß bedeutet in diesem Zusammenhang insbesondere, dass die beiden Frequenzen, mit welchen der Spiegel angetrieben wird, mehr als das 250-fache, vorzugsweise mehr als das 500-fache, voneinander sind.

Mit der Detektoreinheit ist erfindungsgemäß eine Auswerteeinheit verbunden, die beim Auswerten, insbesondere durch einen lagespezifischen Korrekturfaktor, berücksichtigt, dass durch die Schwingbewegung des Spiegels verschiedene Punkte der Speicherfolie unterschiedlich oft und/oder unterschiedlich lange abgetastet werden.

Beim Abtasten von Lissajous-Figuren und einigen anderen Mustern werden einige Punkte mehrfach und andere Punkt nur einmalig abgetastet. Dadurch werden beim späteren Abtasten noch im angeregten Zustand verbliebene Speicherzentren zusätzlich ausgelesen. Die nach jedem weiteren Abtasten eines Punktes zunehmend Verringerung der angeregte Speicherzentren kann z.B. durch eine gewichtete Mittelwertbildung berücksichtigt werden. Das unterschiedliche Abtasten verschiedener Punkte kann jedoch zu einem lokal unterschiedlichen Signal-Rausch-Verhältnis führen. Die Auswerteeinheit kann beim Auswerten deswegen auf eine Korrekturtabelle zurückgreifen, die anhand von Kalibriermessungen erstellt wurde.

Die Lissajous-Figuren können mathematisch simuliert und die erfassten Intensitäten entsprechend korrigiert werden. Besser ist jedoch eine Kalibrierung anhand von Kalibrier-Speicherfolien, z.B. einer uniform belichteten Speicherfolie. Nachdem diese ausgelesen ist, werden die erhaltenen Intensitäten in Korrekturwerte umgesetzt, die in der Korrekturtabelle hinterlegt werden.

Die Vorrichtung kann einen Synchronisierdetektor, vorzugsweise eine Photodiode, umfassen, mit dem das Ausleselicht an einem vorgegebenen Abtastort detektiert werden kann, um die Auswerteeinheit mit der Bewegung des Spiegels zu synchronisieren. Auf diese Weise kann bei Bedarf von der Auswerteeinheit die Erfassung des Detektorsignals mit der Abtastbewegung des Ausleselichtstrahls synchronisiert werden.

Es kann eine Steuereinheit vorgesehen sein, mit welcher periodische Pulse erzeugbar sind, die den Spiegel zum Schwingen anregen. Dabei können die Periodizität, die Pulsweite, die Pulsform und/oder die Pulshöhe veränderbar sein, um die angeregte Schwingungsamplitude und/oder Schwingungsfrequenz des Spiegels zu beeinflussen, wodurch unterschiedliche Muster erzeugbar sind.

Es kann aber auch eine Steuereinheit vorgesehen sein, mit welcher der Spiegel mit einer Sägezahnspannung oder einer Dreieckspannung ansteuerbar ist. Dadurch kann die Speicherfolie gleichmäßig ausgelesen werden.

Es können auch mehrere Spiegel in einem Spiegelarray angeordnet sein. Dabei können unterschiedliche Spiegel unterschiedlichen Bereichen der Speicherfolie zugeordnet werden. Beispielsweise können mit zwei zweiachsigen Spiegeln nacheinander zwei nebeneinander angeordnete Lissajous-Figuren erzeugt werden, um größere Speicherfolien vollständig auszulesen.

Die Spiegel des Spiegelarrays können derart zwischen zwei binären Stellungen umschaltbar sein, dass dadurch die Beleuchtung der Speicherfolie mit Ausleselicht punktweise an- oder ausgeschaltet wird. Besonders kostengünstig ist die Verwendung von binären Mikrospiegelarrays, die in DLP-Beamern zum Einsatz kommen. Die Auflösung, mit der die Speicherfolie in dem abgetasteten Bereich erfasst wird, ist dann durch das verwendete Mikrospiegelarray definiert und liegt bei gängigen Mikrospiegelarrays bei circa 1 000 000 Bildpunkten. Bei dieser Variante können auch Mikrospiegel zum Einsatz kommen, die nur um eine Schwenkachse zwischen zwei diskreten Endstellungen umschaltbar sind.

Die Speicherfolie und die Ablenkeinheit können relativ zueinander bewegbar sein, wobei vorzugsweise die Speicherfolie an der Ablenkeinheit vorbeigeführt wird. Auf diese Weise können großformatige Speicherfolien ausgelesen werden. Bei der Verwendung eines nur einachsigen Spiegels ist die Relativbewegung notwendig, um die Speicherfolie flächig auslesen zu können.

Es kann eine Steuereinheit vorgesehen sein, mit welcher der Spiegel schrittweise ansteuerbar ist, sodass die Speicherfolie pixelweise in einer Matrix ausgelesen werden kann. Schrittweise bedeutet dabei, dass der Spiegel nach jeder Änderung der Kippstellung zur Ruhe kommt. Dies ermöglicht das Auslesen mit einem konstanten Signal-Rausch-Verhältnis.

Es kann ein maximaler Auslesebereich definiert sein, in dem die Speicherfolie allein durch Ablenken des Ausleselichts abtastbar ist. Ferner kann die Vorrichtung eine Löscheinrichtung umfassen, mit der nach dem Auslesen der Speicherfolie in einem Löschbereich Löschlicht auf die Speicherfolie richtbar ist, wobei der Löschbereich auf der Speicherfolie mindestens so groß wie der Auslesebereich ist. Fallen der Auslesebereich und der Löschbereich zusammen, kann die Speicherfolie am selben Ort gelöscht werden, an welchem sie ausgelesen wird, sodass keine Antriebsmittel zum Fördern in Richtung einer Löscheinrichtung notwendig sind.

Nach einer Weiterbildung ist vorgesehen, dass das von der Ablenkeinheit abgelenkte Ausleselicht auf der Speicherfolie einen Auftrefffleck erzeugt und die Löscheinrichtung ein Umschaltelement umfasst, mit dem der Auftrefffleck zum Löschen der Speicherfolie vergrößert werden kann, wobei das Ausleselicht als Löschlicht verwendet wird.

Werden zum Löschen der Speicherfolie Komponenten verwendet, die ohnehin zum Auslesen benötigt werden, müssen kaum zusätzliche Komponenten verbaut werden. Eine Vergrößerung des Auftreffflecks ("beam foot print") auf der Speicherfolie kann beispielsweise durch einen Aktuator zum Verschieben oder Krümmen des Spiegels erreicht werden. Es kann aber auch z.B. eine verschiebbare Kondensorlinse am Laser oder ein in den Strahlengang einfahrbare Streuscheibe verwendetet werden.

Die Löscheinrichtung kann eine Intensitätssteuereinrichtung umfassen, mit welcher zum Löschen der Speicherfolie die Intensität des Ausleselichts erhöht werden kann. Auf diese Weise kann zum Löschen dieselbe Lichtquelle verwendet werden, die auch zum Auslesen genutzt wird, wobei durch die Erhöhung der Intensität eine vollständige Löschung von gegebenenfalls noch angeregten Speicherzentren erreicht wird.

Alternativ kann die Löscheinrichtung eine Lichtquelle zum Erzeugen von Löschlicht umfassen, wobei das Löschlicht auf den steuerbaren Spiegel gerichtet ist, sodass mit Hilfe der Ablenkeinheit das Löschlicht zum Löschen der Speicherfolie sequentiell auf die Speicherfolie richtbar ist. Spezielles Löschlicht kann auch in Kombination mit einer Vergrößerung des Auftreffflecks verwendet werden.

Dabei kann im Strahlengang vor dem steuerbaren Spiegel ein Einspeiseelement angeordnet sein, mit dem gleichzeitig oder wechselweise das Ausleselicht und das Löschlicht auf den steuerbaren Spiegel richtbar sind.

Die Löscheinrichtung kann mehrere Löschlichtquellen, insbesondere Leuchtdioden, umfassen, die um die Speicherfolie herum angeordnet sind. Dies ist eine baulich sehr einfache Ausgestaltung einer Löscheinrichtung. Vorzugsweise sind die Löschlichtquellen dabei so angeordnet, das Löschlicht auf die gesamte Speicherfolie fällt.

Die Löschlichtquellen können auf einer Seite der Speicherfolie angeordnet sein, von welcher das Ausleselicht auf die Speicherfolie fällt. Auf diese Weise können sowohl transparente als auch nicht transparente Speicherfolien gelöscht werden.

Das Löschlicht kann ein breitbandigeres Spektrum als das Ausleselicht haben, wodurch eine höhere Löscheffizienz erzielt wird.

Die Ablenkeinheit kann derart angeordnet sein, dass mit ihr das Ausleselicht auf eine vordere Oberfläche der Speicherfolie richtbar ist. Die Detektoreinheit für Fluoreszenzlicht ist dabei derart angeordnet, dass mit ihr das aus einer hinteren Oberfläche der Speicherfolie austretende Fluoreszenzlicht detektierbar ist. Mit einer solchen Anordnung können transparente Speicherfolien ausgelesen werden, wobei je nach Anordnung das Fluoreszenzlicht direkt oder indirekt über einen Reflektor in die Detektoreinheit gelangen kann.

Es kann eine für das Fluoreszenzlicht transparente Stützplatte vorgesehen sein, an der die Speicherfolie anliegt. Auf diese Weise kann die Speicherfolie an ihrer Rückseite gestützt werden, ohne dass das dort austretende Fluoreszenzlicht für die Messung verloren geht. Die Stützplatte kann dabei als optisches Filter wirken, das Ausleselicht blockiert und Fluoreszenzlicht passieren lässt. Aufgrund der Filterwirkung der Stützplatte tritt dann hinter der Stützplatte nur noch Fluoreszenzlicht aus.

Die Stützplatte kann eine zylindrisch gekrümmte Stützfläche für die Speicherfolie haben. Dadurch kann zumindest in einer Ausleserichtung ein senkrechter Einfall des Ausleselichts auf die Speicherfolie sichergestellt werden. Dabei kann ein Klemmelement vorgesehen sein, mit welchem die Speicherfolie an die gekrümmte Stützfläche angepresst wird. Ein mit der Stützfläche zusammenarbeitendes Klemmelement, wie z.B. ein Klemmbügel, ist eine bauliche einfache Anordnung, um die Speicherfolie in die Zylinderform zu bringen.

Die Stützplatte kann auch durch ein Eintrittsfenster der Detektoreinheit gebildet sein. Bei entsprechender Anpassung des Auslesebereichs kann so die Speicherfolie direkt am Eintrittsfenster der Detektoreinheit anliegen und erfasst werden. Insbesondere in Kombination mit der Filterwirkung ergibt sich so ein besonders einfacher Aufbau der Vorrichtung.

Das Eintrittsfenster kann dabei mindestens so groß ist wie die auszulesende Speicherfolie sein und insbesondere deren Grundform haben. Dadurch ist die gesamte Speicherfolie erfassbar, ohne dass diese verschoben werden muss. Die Größe des Eintrittsfensters kann sich dabei an den üblichen Standardgrößen (Größe 0, 1, 2 etc.) der Speicherfolien orientieren.

Es kann ein Stützrahmen und ein Klemmelement vorgesehen sein, zwischen welchen die Speicherfolie gehalten wird, wobei diese insbesondere derart ausgestaltet und angeordnet sind, dass der Speicherfolie eine zylindrische Krümmung aufgeprägt wird.

Anstatt einer durchgehenden Stützplatte kann auch nur ein Stützrahmen vorgesehen sein, welcher die Speichefolie nur in Randbereichen trägt, wobei sowohl ein vollständig umlaufender Rahmen als auch ein nur abschnittsweise vorhandener Rahmen denkbar ist. Dadurch ist im Strahlengang des Fluoreszenzlichts noch weniger Material, welches das Fluoreszenzlicht teilweise absorbieren oder spiegeln könnte. Der Stützrahmen kann an der Vorderseite oder an der Rückseite der Speicherfolie anliegen, wobei das Klemmelement dann die entsprechend komplementäre Funktion übernimmt.

Bezüglich des Verfahrens wird die oben genannte Aufgabe durch ein Verfahren mit den Merkmalen des Anspruchs 17 gelöst.

Eine Steuereinheit kann dabei den Mikrospiegel um die beiden Schwenkachsen mit Frequenzen antreiben, die einem großen, vorzugsweise unterschiedlichen, vorzugsweise ganzzahligen Vielfachen einer Basisfrequenz entsprechen, insbesondere dem 0,5-fachen der gewünschten Zeilenzahl bzw. der Spaltenzahl des Bildes, und/oder sich von einem solchen ganzzahligen Vielfachen voneinander geringfügig unterscheiden, insbesondere um 10% der kleineren Frequenz. Dadurch werden Muster erzeugt, welche die Speicherfolie vollständig abtasten. Insbesondere kann das sequentielle Abtasten der Speicherfolie entlang einer Lissajous-Figur erfolgen.

Dadurch lässt sich der Mikrospiegel mit einem Ansteuersignal ansteuern, dessen Frequenz zumindest annähernd gleich einer Eigenfrequenz des Mikrospiegels ist.

Die Speicherfolie kann nach dem Abtasten gelöscht werden, während die Speicherfolie am Ort des Abtastens verbleibt. Zur Löschung der Speicherfolie kann die Intensität des Ausleselichts erhöht und dann die Speicherfolie mit Hilfe der Ablenkeinheit abgetastet werden. Zur Löschung der Speicherfolie kann ein Auftrefffleck des auf die Speicherfolie fallenden Ausleselichts oder eines auf die Speicherfolie fallenden Löschlichts vergrößert werden.

Die Speicherfolie kann zudem vor dem Abtasten in eine zylindrische Form gebracht werden.

### KURZE BESCHREIBUNG DER ZEICHNUNGEN

Nachstehend wird die Erfindung anhand von Ausführungsbeispielen unter Bezugnahme auf die Zeichnungen erläutert. Darin zeigen:
- Figur 1: eine vereinfachte perspektivische Darstellung einer Scanvorrichtung zum Auslesen von Speicherfolien nach einem ersten Ausführungsbeispiel;
- Figur 2: eine perspektivische Darstellung eines in der Scanvorrichtung verwendeten Mikrospiegels;
- Figur 3: eine Aufsicht auf eine Speicherfolie, die entlang eines Abtastpfades nach einem ersten Modus ausgelesen wird;
- Figur 4: eine Aufsicht auf eine Speicherfolie, die entlang eines Abtastpfades nach einem anderen Modus ausgelesen wird; und
- Figur 5: eine vereinfachte perspektivische Darstellung einer Scanvorrichtung nach einem anderen Ausführungsbeispiel;
- Figur 6: eine vereinfachte perspektivische Darstellung einer Scanvorrichtung für transparente Speicherfolien;
- Figur 7: eine vereinfachte perspektivische Darstellung einer Scanvorrichtung für transparente Speicherfolien nach einem Ausführungsbeispiel, bei dem eine andere Löscheinrichtung und eine andere Detektoreinheit verwendet wird;
- Figur 8: eine vereinfachte perspektivische Darstellung einer Scanvorrichtung für transparente Speicherfolien nach einem weiteren Ausführungsbeispiel mit geänderter Löscheinrichtung;
- Figur 9: eine vereinfachte perspektivische Darstellung einer Scanvorrichtung für transparente Speicherfolien nach einem Ausführungsbeispiel, bei dem die Speicherfolie von einem Stützrahmen getragen wird.

### BESCHREIBUNG BEVORZUGTER AUSFÜHRUNGSBEISPIELE

### 1. Erste Gruppe von Ausführungsbeispielen

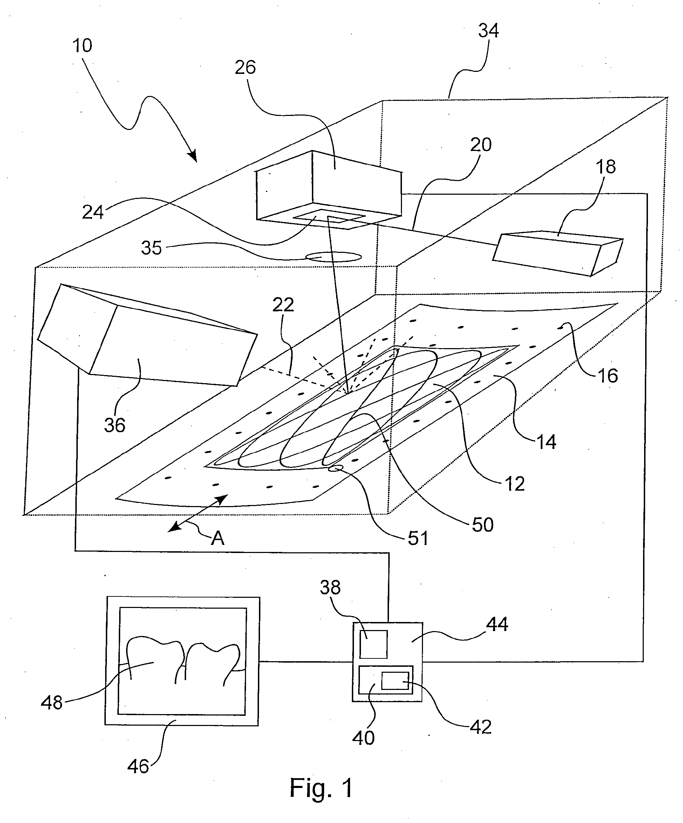

Figur 1 zeigt eine insgesamt mit 10 bezeichnete Scanvorrichtung zum Auslesen einer Speicherfolie 12, die in Form von durch Röntgenstrahlung angeregten, metastabilen Speicherzentren ein latentes Röntgenbild trägt.

Die Scanvorrichtung 10 weist eine Stützfläche 14 für die Speicherfolie 12 auf. Zum Fixieren der Speicherfolie 12 ist die Stützfläche 14 dabei mit einer Vielzahl von Saugbohrungen 16 versehen, die über eine nicht gezeigte Unterdruckquelle mit Unterdruck beaufschlagbar sind, so dass die Speicherfolie 12, die im Allgemeinen flexibel ist, sich plan an die Stützfläche 14 anschmiegen kann.

Die Scanvorrichtung 10 umfasst ferner als Ausleselichtquelle einen Laser 18, der einen Ausleselichtstrahl 20 mit einer im Roten liegenden Wellenlänge erzeugt, mit dem die angeregten Speicherzentren der Speicherfolie 12 zu Fluoreszenz angeregt werden können, sodass diese Fluoreszenzlicht 22 abgeben, welches typischerweise im Blauen liegt.

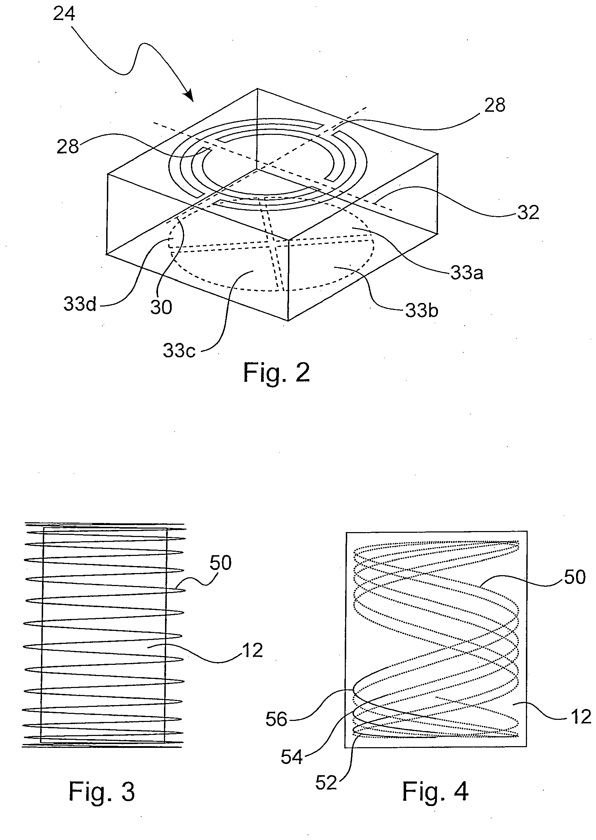

Der Laser 18 ist so angeordnet, dass er den Ausleselichtstrahl 20 auf einen steuerbaren Mikrospiegel 24 richtet, der an einer Ablenkeinheit 26 angeordnet ist. Dieser als MEMS-Komponente ausgeführte Mikrospiegel 24 ist in Figur 2 gezeigt. Dank seiner kardanischen Festkörpergelenkaufhängung 28 ist er um zwei Achsen 30 und 32 schwenkbar und kann mit Hilfe von an seiner Unterseite angreifenden kapazitiven Aktoren 33a, 33b, 33c, 33d und zugeordneten nicht gezeigten Steuerkreisen der Ablenkeinheit 26 um die beiden Achsen 30, 32 kontinuierlich verschwenkt werden.

Um zumindest in einer Richtung einen senkrechten Einfall des Ausleselichtstrahls 20 auf die Speicherfolie 12 zu erhalten, weist die Stützfläche 14 im gezeigten Ausführungsbeispiel eine teilzylindrisch gekrümmte Form auf, die sich parallel zur Schwenkachse 30 des Mikrospiegels 24 erstreckt. Die Stützfläche kann jedoch auch vollständig eben ausgeführt sein. Bei Bedarf kann zudem eine f-Theta Optik 35 vorgesehen werden, welche den Einfallswinkel des Ausleselichtstrahls 20 entsprechend der Form der Stützfläche 14 anpasst.

Der Laser 18, die Stützfläche 14 mit der Speicherfolie 12 sowie die Ablenkeinheit 26 mit dem Mikrospiegel 24 sind in der Scanvorrichtung 10 geometrisch so voneinander beabstandet und relativ zueinander angeordnet, dass der Ausleselichtstrahl 20 mit Hilfe des Mikrospiegels 24 mindestens die gesamte Fläche der Speicherfolie 12 abtasten kann. Ermöglicht die Scanvorrichtung 10 das Auslesen unterschiedlich großer Speicherfolien 12, so gibt selbstverständlich die größte Speicherfolie 12 die abzutastende Gesamtfläche vor.

Nimmt man in Kauf, dass z.B. Randbereiche der Speicherfolie 12 nicht ausgelesen werden, so können die verschiedenen Komponenten aber auch derart angeordnet werden, dass durch Verschwenken des Mikrospiegels 24 nur ein Teilbereich der Speicherfolie abtastbar ist.

Die Scanvorrichtung 10 umfasst ferner einen in der Zeichnung punktiert angedeuteten Reflektor 34, der den gesamten Messraum um die Speicherfolie 12 herum lichtdicht umschließt, sodass das von der Speicherfolie 12 ausgehende Fluoreszenzlicht 22 letztlich zu einem Photodetektor 36 reflektiert wird. Um zu verhindern, dass auch gestreutes Ausleselicht 20 in den Photodetektor 36 gelangt, kann sowohl der Reflektor 34 als auch ein Eingangsfenster des Photodetektors 36 mit einem dichroitischen Filtermaterial versehen sein, welches das Ausleselicht 20 blockiert bzw. absorbiert und für das Fluoreszenzlicht 22 durchlässig ist.

Zur Steuerung des Auslesevorgangs umfasst die Scanvorrichtung 10 eine Steuereinheit 38 und eine Auswerteeinheit 40 mit einem Korrekturspeicher 42, die hier als Teil einer integrierten Geräteelektronik 44 gezeigt sind, aber auch als Steuersoftware auf einem separaten PC implementiert sein können. Zur Bedienung sind die Steuereinheit 38 und die Auswerteeinheit 40 mit einer Anzeige- und Bedieneinheit 46 verbunden, mit welcher Arbeitsparameter festgelegt werden können und das von der Speicherfolie 12 ausgelesene Bild 48 angezeigt werden kann.

### Die Scanvorrichtung 10 arbeitet wie folgt:

Durch Verschwenken des um die beiden Schwenkachsen 30, 32 steuerbaren Mikrospiegels 24 wird die Speicherfolie 12 punktweise sequentiell mit dem Ausleselichtstrahl 20 abgetastet. Dabei wird die Intensität des abgegebenen Fluoreszenzlichts 22 mit Hilfe des Photodetektors 36 und der Auswerteeinheit 40 erfasst und zur Anzeige aufbereitet.

Die Steuereinheit 38 steuert den Mikrospiegel 24 derart an, dass er Schwingungen um seine beiden Schwenkachsen 30, 32 vollführt. Aufgrund der Überlagerung der beiden Schwingungen tastet der Ausleselichtstrahl 20 die Speicherfolie 12 entlang einer Lissajous-Figur 50 als Abtastmuster ab. Durch die beiden Schwingungsfrequenz und deren Verhältnis zueinander wird die Form der Lissajous-Figur 50 bestimmt, sodass durch andere Frequenzen andere Lissajous-Figuren 50 erzeugt werden. Im Ausführungsbeispiel der Figur 1 weist die Lissajous-Figur 50 in Längsrichtung vier Schwingungen und in der Querrichtung drei Schwingungen auf bevor sich das Abtastmuster wiederholt.

Zur Synchronisierung der Auswerteeinheit 40 mit der Bewegung des Ausleselichtstrahls 20 können in der Stützfläche 14 neben der Speicherfolie 14 eine oder mehr Photodioden 51 angeordnet sein. Überstreift der Ausleselichtstrahl 20 diese Photodioden 51, deren Ort bekannt ist, so erhält die Auswerteeinheit 40 entsprechende Synchronisierungssignale.

Um eine hohe Ausleseeffizienz zu erreichen, wird der Mikrospiegel 24 mit Schwingungsfrequenzen angetrieben, die nahe bei den Eigenfrequenzen um die beiden Achsen 30, 32 liegen. Die Eigenfrequenzen sind dabei unter anderem durch die Masse des Mikrospiegels 24 und die Winkelfederkonstanten der kardanischen Festkörpergelenkaufhängung 28 festgelegt.

Um alle Bereiche der Speicherfolie 12 abzutasten, können nun einerseits sehr große Frequenzverhältnisse wie beispielsweise 200:1 ausgewählt werden, sodass das Abtasten, wie in Figur 3 angedeutet, nahezu einem zeilenweisen Abtasten entspricht, bei welchem entlang einer Richtung eine langsame Bewegung des Ausleselichtstrahl 20 erfolgt, während in der anderen Richtung mehrere Schwenks schnell aufeinander folgen. Dabei kann der steuerbare Mikrospiegel 24 mit einer Schwingungsamplitude angetrieben werden, bei der der Ausleselichtstrahl 20 über die Ränder der Speicherfolie 12 hinausläuft. So werden die Bereiche der Umkehrpunkte, in welchen sich der Ausleselichtstrahl 20 verhältnismäßig lange aufhält, in Bereiche außerhalb der Speicherfolie 12 verschoben, wodurch sich auf der Speicherfolie 12 selbst ein gleichmäßigeres Abtastmuster ergibt.

Die Frequenzverhältnisse der beiden Schwingungen können jedoch auch leicht gegeneinander verstimmt werden, beispielsweise im Verhältnis 3:4, 05, so dass sich die Linien der Lissajous-Figur 50 bei jedem Durchlauf der Figur leicht verschieben und so eine bewegte Lissajous-Figur 50 erzeugt wird, die nach und nach alle Bereiche der Speicherfolie 12 abtastet. Dieses Vorgehen ist in Figur 4 angedeutet, in welcher mit 52, 54 und 56 jeweils die Anfangsbereiche des ersten, zweiten und dritten Durchlaufs der Lissajous-Figur 50 angedeutet sind.

Da die Speicherfolie 12 bei diesem Verfahren an manchen Punkten, beispielsweise an den Kreuzungspunkten der Lissajous-Figur 50, mehrfach abgetastet wird und dabei möglicherweise noch verbliebene angeregte Speicherzentren zusätzlich Fluoreszenzlicht 22 abgeben, muss die Auswerteeinheit 40 dies bei der Auswertung des Photodetektorssignals und dem Bildaufbau entsprechend berücksichtigen.

Dazu kann zum Kalibrieren eine vollständig uniform belichtete Speicherfolie 12 verwendet werden, die mit der zum Auslesen vorgesehenen Lissajous-Figur 50 abgetastet wird. Dabei werden die vom Photodetektor 36 empfangenen Signale aufsummiert, wobei sich aufgrund des mehrfachen Abtasten der Kreuzungspunkte an diesen Stellen hellere aufsummierte Intensitäten im Bild 48 ergeben. Das so gewonnene Kalibrierbild 48 wird in Korrekturwerte umgesetzt, die im Korrekturspeicher 42 der Auswerteeinheit 40 hinterlegt werden. Wird in der Folge eine Speicherfolie 12 ausgelesen, die tatsächliche Bildinformationen enthält, werden die ermittelten Intensitäten entsprechend den im Korrekturspeicher 42 enthaltenen Korrekturwerten korrigiert.

Zu Kalibrierzwecken sind auch mathematische Methoden denkbar, bei welchen der Abtastpfad der Lissajous-Figur 50 modelliert und beim Aufsummieren des Photodetektorsignals entsprechend berücksichtigt wird. Auch so können die Auswirkungen des mehrfachen Abtasten oder der unterschiedlichen Bewegungsgeschwindigkeiten entlang des Abtastmusters kompensieren und Korrekturwerte ermittelt werden, die im Korrekturspeicher 42 hinterlegt werden. Allerdings können bei diesen rein mathematischen Methoden spezielle Eigenschaften der Folie, z.B. welcher Prozentsatz der angeregten Speicherzentren nach einem ersten Auslesevorgang noch verbleibt, nur berücksichtig werden, wenn der Speicherfolien Typ vom Bediener oder durch eine automatische Erkennung angegeben wird.

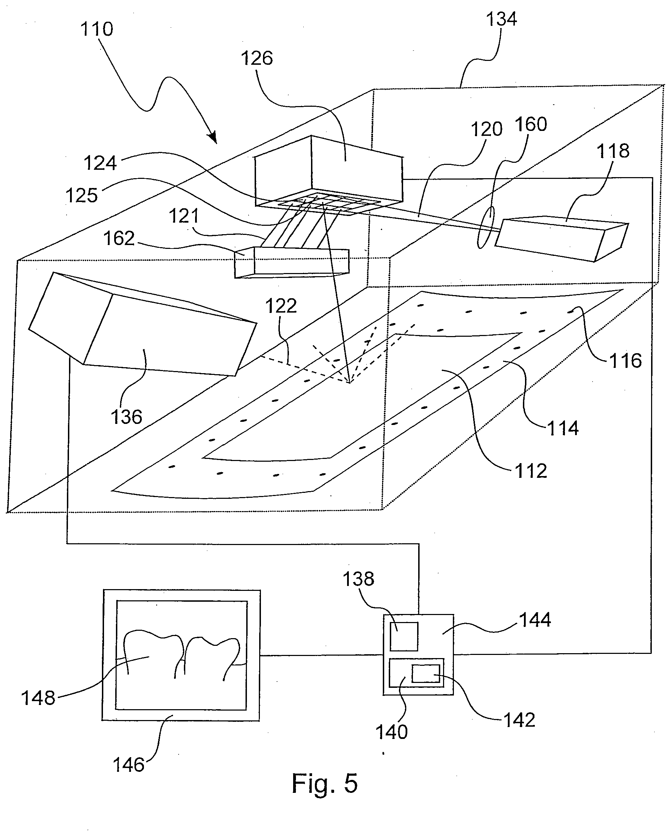

Figur 5 zeigt eine Scanvorrichtung 110 nach einem anderen Ausführungsbeispiel, wobei strukturell ähnliche Komponenten um 100 erhöhte Bezugszeichen tragen.

Beim Ausführungsbeispiel der Figur 5 ist anstelle des Mikrospiegels 24 ein Mikrospiegelarray 124 an der Ablenkeinheit 126 vorgesehen, bei welchem die einzelnen Mikrospiegel 125 binär zwischen zwei Verkippungsstellungen umgeschaltet werden können.

Derartige Mikrospiegelarrays 124 werden im Bereich der Unterhaltungselektronik in DLP-Beamern zum Erzeugen von Projektionsbildern verwendet und sind in hohen Stückzahlen günstig am Markt erhältlich.

Um das gesamte Mikrospiegelarray 124 zu beleuchten wird der von dem Laser 118 ausgehende Ausleselichtstrahl 120 über eine Aufweitungsoptik 160 aufgeweitet. Durch Umschalten der einzelnen Mikrospiegel 125 können dann Teilstrahlen 121 des Ausleselichtstrahls 120 entweder auf die Speicherfolie 112 oder auf einen Strahlabsorber 162 gerichtet werden, welcher die Teilstrahlen 121 schluckt. Hierzu kann der Strahlabsorber 162 stark absorbierend ausgeführt sein.

Die Scanvorrichtung 110 funktioniert so, dass jeweils nur einer der Mikrospiegel 125 des Mikrospiegelarrays 124 auf "EIN" gestellt ist, d.h. dass dessen zugehöriger Teilstrahl 121 auf einen ihm zugeordneten Punkt auf der Speicherfolie 112 gerichtet ist. Alle anderen Mikrospiegel 125 sind zu diesem Zeitpunkt auf "AUS" gestellt, d.h. deren Teilstrahlen 121 werden auf den Strahlabsorber 162 gerichtet. So kann die Speicherfolie 112 durch punktweises An- und Abschalten der Mikrospiegel 125 Punkt für Punkt abgetastet werden.

In Abwandlung kann der Mikrospiegel 24 um nur eine Schwenkachse 30 verschwenkbar sein. In diesem Fall kann die Stützfläche 14 wie in Figur 1 durch den Doppelpfeil A angedeutet, entlang einer Richtung, vorzugsweise axial entlang der Zylinderform der Stützfläche 14, bewegt werden, um die Speicherfolie 12 an der von dem schwenkenden Ausleselichtstrahl 20 gebildeten Ausleselinie vorbeizubewegen. Die Stützfläche 14 kann aber auch bei Verwendung des zweiachsigen Mikrospiegels 24 bewegt werden, falls besonders großflächige Speicherfolien 12 ausgelesen werden müssen.

In weiterer Abwandlung kann der Mikrospiegel 24 auch schrittweise angesteuert werden, sodass der Mikrospiegel 24 in einzelnen Zwischenstellungen der Verkippung verharren kann, was ein Auslesen pixelweise in einer Matrix erlaubt. Dadurch kann der Auslesestrahl an jedem Punkt der Speicherfolie 12 eine gewünschte Auslesezeit verweilen, wobei dann auch jeder Punkt gleich lang ausgelesen werden kann. Dies führt dazu, dass jeder Punkt des erfassten Bildes das gleiche Signal-Rausch-Verhältnis aufweist.

### 2. Zweite Gruppe von Ausführungsbeispielen

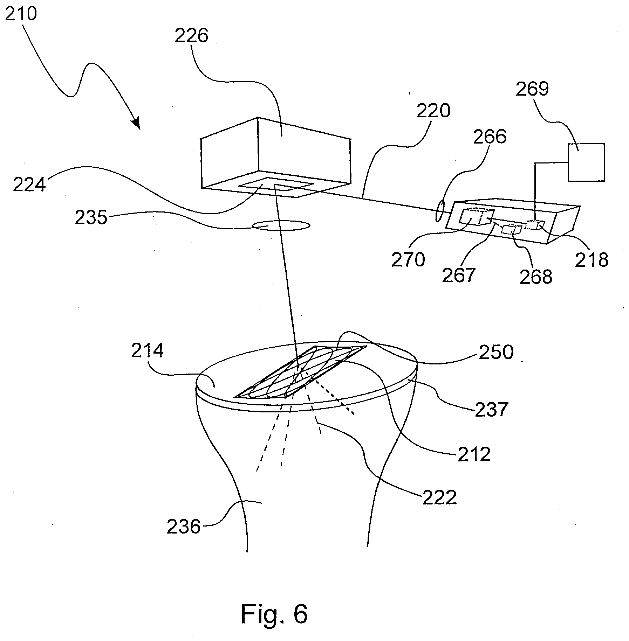

Die Figuren 6 bis 9 zeigen Ausführungsbeispiele mit alternativen Anordnungen der Detektoreinheit und verschiedene Möglichkeiten zum Löschen der Speicherfolie, nachdem diese ausgelesen wurde. Strukturell ähnliche Komponenten tragen dabei jeweils um 200, 300, 400 bzw. 500 erhöhte Bezugszeichen. Um die Figuren 6 bis 9 zu vereinfachen, ist die Geräteelektronik 44 in diesen nicht gezeigt.

Figur 6 zeigt eine Scanvorrichtung 210, mit der eine für Fluoreszenzlicht transparente Speicherfolie 212 ausgelesen werden kann.

Die Scanvorrichtung 210 umfasst dazu einen Photodetektor 236, dessen Eintrittsfenster von einer Filterplatte 237 gebildet wird, die das Ausleselicht 220 blockiert, aber das Fluoreszenzlicht 222 passieren lässt. Der Photodetektor 236 ist ferner so angeordnet, dass die nach außen weisende Oberfläche der Filterplatte 237 zugleich als Stützfläche 214 dient, an der die Speicherfolie 212 anliegt. Die Speicherfolie 212 ist somit direkt vor dem Eintrittsfenster des Photodetektors 236 angeordnet.

Während des Auslesevorgangs trifft das Ausleselicht 220 von einer Seite auf die Speicherfolie 212. Das dabei ausgelöste Fluoreszenzlicht 222 tritt dann auf der anderen Seite der Speicherfolie 212 aus, um von dort durch die Filterplatte 237 hindurch in den Photodetektor 236 zu gelangen und dort ein Signal zu erzeugen. Die Filterwirkung der Filterplatte 237 verhindert, dass auch das Ausleselicht 220 im Photodetektor 236 ein Signal erzeugt.

Um eine bereits ausgelesene Speicherfolie 212 vollständig zu löschen, sind bei der Scanvorrichtung 210 als Löscheinrichtung eine verschiebbare Kondensorlinse 266, eine Löschlichtquelle 268 und ein Einspeiseelement 270 vorgesehen. Mit dem Einspeiseelement 270 lässt sich sowohl das Ausleselicht 220 des Lasers 218 als auch das Löschlicht 267 der Löschlichtquelle 268 in den Strahlengang einspeisen, der zur Ablenkeinheit 226 führt.

Zum Löschen der Speicherfolie 212 wird die Kondensorlinse 266 so verschoben, dass sich der Auftrefffleck des Ausleselichts 220 bzw. des Löschlichts 267 auf der Speicherfolie 212 vergrößert. Danach wird die Speicherfolie 212 solange abgetastet, bis von einer ausreichend vollständigen Löschung noch verbliebener angeregter Speicherzentren ausgegangen werden kann.

Die Verwendung von breitbandigerem Löschlicht 267 ist dabei nicht zwingend erforderlich. So kann es unter Umständen ausreichen, die Intensität des vom Laser 218 abgegebenen Ausleselichts 220 mit Hilfe der Intensitätssteuereinheit 269 zu erhöhen und mit diesem die Löschung durchzuführen. In diesem Falle kann auf die Löschlichtquelle 268 und das Einspeiseelement 270 verzichtet werden.

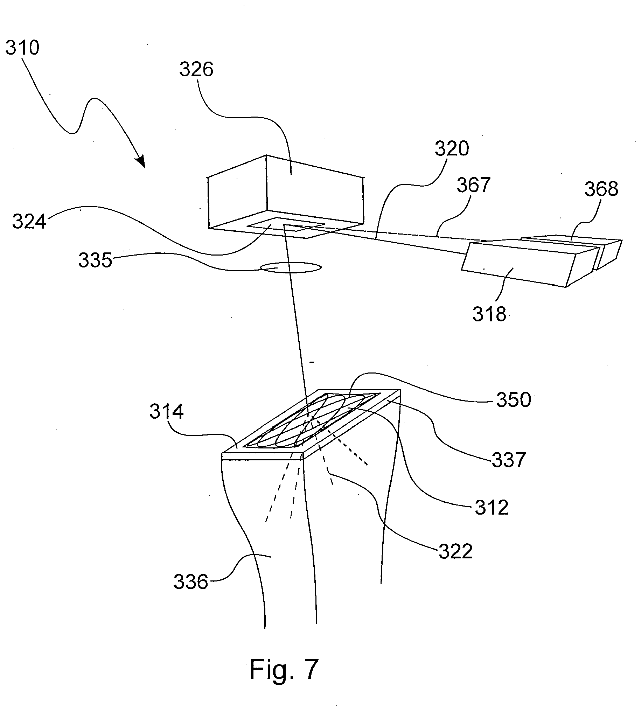

Figur 7 zeigt eine Scanvorrichtung 310, bei der zwar ebenfalls eine separate Löschlichtquelle 368 vorgesehen ist. Die Löschlichtquelle 368 wird jedoch nicht in denselben Strahlengang wie das Ausleselicht 320 eingespeist, sondern unter einem anderen Winkel als das Ausleselicht 320 auf den Mikrospiegel 324 der Ablenkeinheit 326 gerichtet.

Zum Löschen wird dann der Mikrospiegel 324 von der Steuereinheit 344 unter Berücksichtigung eines entsprechenden Offset-Winkels so angesteuert, dass das aus einer anderen Richtung als das Ausleselicht 320 auf den Mikrospiegel 324 fallende Löschlicht 367 trotzdem auf die Speicherfolie 312 gerichtet wird.

Ferner weist die Scanvorrichtung 310 eine Detektoreinheit 336 auf, die ein rechteckiges Eintrittsfenster aufweist, dessen Größe und Form in etwa der der Speicherfolie 312 entspricht.

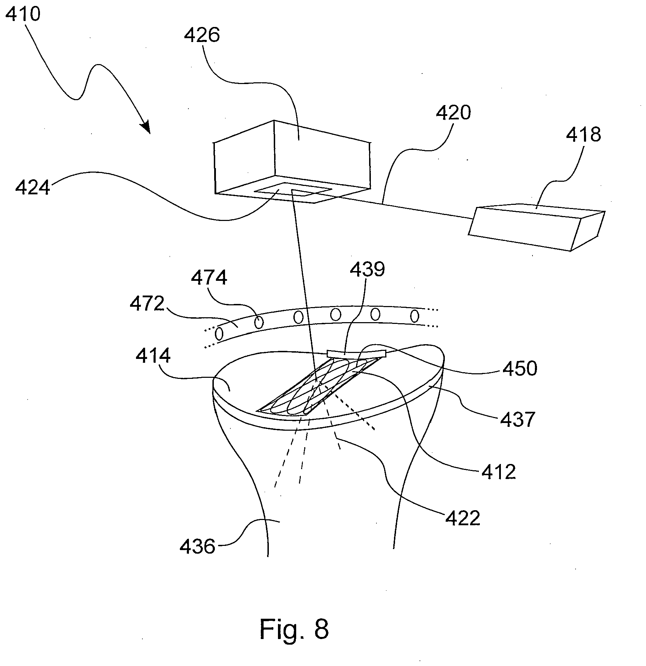

Das Ausführungsbeispiel der Figur 8 zeigt eine Scanvorrichtung 410, bei der die Filterplatte 437 eine zylindrisch gekrümmte Stützfläche 414 aufweist, an welche die Speicherfolie 412 mit Hilfe eines Klemmelements 439 angelegt wird. Der Krümmungsradius der Stützfläche 414 entspricht dabei deren Abstand zum Mikrospiegel 424, sodass das Ausleselicht 420 in Querrichtung zur Zylinderachse unabhängig vom Ablenkungswinkel stets senkrecht auf die Speicherfolie 412 fällt.

In axialer Richtung der Stützfläche 414 kann ein senkrechter Einfall auf der Speicherfolie 412 über eine einachsig wirkende F-Theta-Optik erzeugt werden. Nimmt man jedoch eine durch unterschiedlichen Schrägeinfall auftretenden Verschlechterungen der Auslesequalität in axialer Richtung hin, so kann auf eine F-Theta-Optik vollständig verzichtet werden.

Zur vollständigen Löschung der Speicherfolie 412 ist bei diesem Ausführungsbeispiel als Löscheinrichtung ein LED-Band 472 mit Löschlicht-LEDs 474 vorgesehen, das oberhalb der Filterplatte 437 so umlaufend angeordnet ist, dass die gleichmäßig beabstandeten Löschlicht-LEDs 474 ihr Löschlicht 467 auf die Speicherfolie 412 richten können.

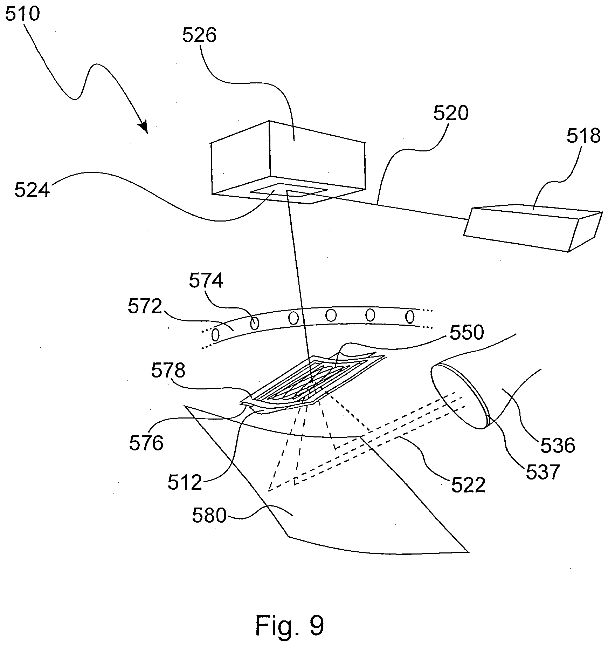

Schließlich zeigt die Figur 9 ein Ausführungsbeispiel für eine Scanvorrichtung 510, bei der ein zylindrisch gekrümmter Stützrahmen 576 für eine transparente Speicherfolie 512 vorgesehen ist. Mit dem Stützrahmen 576 arbeitet ein Klemmrahmen 578 zusammen, sodass die zwischen den Stützrahmen 576 und den Klemmrahmen 578 eingebrachte Speicherfolie 512 zylindrisch gekrümmt gehalten wird.

Um die Scanvorrichtung 510 möglichst kompakt zu halten, umfasst diese ferner einen Reflektorspiegel 580, der hier gekrümmt ausgeführt ist und der bezüglich des Stützrahmens 576 auf der dem Mikrospiegel 524 gegenüberliegenden Seite angeordnet ist. Der Reflektorspiegel 580 und der Photodetektor 536 sind ferner so zueinander angeordnet, dass das an der Speicherfolie 512 aus deren Rückseite austretende Fluoreszenzlicht 522 nach Reflexion an dem Reflektorspiegel 580 auf das Eintrittsfenster des Photodetektors 536 fällt. Aufgrund des Reflektorspiegels 580 kann die Position des Photodetektors 536 freier gewählt werden kann, was eine kompaktere Bauform der Scannvorrichtung 510 ermöglicht. Zudem kann ein Photodetektor 536 mit einem kleineren Eintrittsfenster verwendet werden, wenn der Reflektorspiegel 580 eine fokussierende Wirkung aufweist.

## Patentansprüche

1. Vorrichtung (10; 110; 210; 310; 410; 510) zum Auslesen einer belichteten Speicherfolie (12; 112; 212; 312; 412; 512), umfassend
a) eine Lichtquelle (18; 118; 218; 318; 418; 518), mit der Ausleselicht (20; 120, 121; 220; 320; 420; 520) erzeugbar ist,
b) eine Ablenkeinheit (26; 126; 226; 326; 426; 526), mit der das Ausleselicht (20; 120, 121; 220; 320; 420; 520) zum Abtasten der Speicherfolie (12; 112; 212; 312; 412; 512) sequentiell auf die Speicherfolie (12; 112; 212; 312; 412; 512) richtbar ist, wobei die Ablenkeinheit (26; 126; 226; 326; 426; 526) einen steuerbaren Spiegel (24; 124, 125; 224; 324; 424; 524) zum Ablenken des Ausleselichts (20; 120, 121; 220; 320; 420; 520) umfasst,
c) eine Detektoreinheit (36; 136; 236; 336; 436; 536) für Fluoreszenzlicht (22; 122; 222; 322; 422; 522), das von der Speicherfolie (12; 112; 212; 312; 412; 512) beim Abtasten mit dem Ausleselicht (20; 120, 121; 220; 320; 420; 520) abgegeben wird,
wobei
d) der steuerbare Spiegel (24; 124, 125; 224; 324; 424; 524) ein Mikrospiegel ist,
**dadurch gekennzeichnet, dass**
e) der Spiegel (24; 124, 125; 224; 324; 424; 524) um eine erste Schwenkachse (30) und um eine davon verschiedene zweite Schwenkachse (32) unterschiedliche Winkelstellungen einnehmen kann, dass
f) eine Steuereinheit (38; 138) vorgesehen ist, die den Spiegel (24; 224; 324; 424; 524) so ansteuert, dass der Spiegel um die beiden Schwenkachsen (30, 32) mit unterschiedlichen Frequenzen schwingt, und dass
g) mit der Detektoreinheit (36; 236; 336; 436; 536) eine Auswerteeinheit (40) verbunden ist, die beim Auswerten berücksichtigt, dass durch die Schwingbewegung des Spiegels (24; 224; 324; 424; 524) verschiedene Punkte der Speicherfolie (12; 212; 312; 412; 512) unterschiedlich oft und/oder unterschiedlich lange abgetastet werden.

2. Vorrichtung nach Anspruch 1, **dadurch gekennzeichnet, dass** der Spiegel (24; 224; 324; 424; 524) um die beiden Schwenkachsen (30, 32) jeweils kontinuierlich zwischen zwei Endstellungen verschwenkbar ist.

3. Vorrichtung nach einem der vorhergehenden Ansprüche, **dadurch gekennzeichnet, dass** die Frequenzen sich um mehr als das 250-fache voneinander unterscheiden.

4. Vorrichtung nach einem der vorhergehenden Ansprüche, **dadurch gekennzeichnet, dass** der Spiegel (24; 224; 324; 424; 524) um die beiden Schwenkachsen (30, 32) unterschiedliche Eigenfrequenzen aufweist.

5. Vorrichtung nach einem der vorhergehenden Ansprüche, **dadurch gekennzeichnet, dass** die Steuereinheit (38) den Spiegel (24; 224; 324; 424; 524) so ansteuert, dass auf der Speicherfolie (12; 212; 312; 412; 512) mit dem Ausleselicht (20; 220; 320; 420; 520) ein vorgegebenes Muster, insbesondere eine Lissajous-Figur (50; 250; 350; 450; 550), abgetastet wird.

6. Vorrichtung nach Anspruch 5, **dadurch gekennzeichnet, dass** das Muster so gewählt ist, dass die Speicherfolie (12; 212; 312; 412; 512) vollständig abgetastet wird.

7. Vorrichtung nach einem der vorhergehenden Ansprüche, **dadurch gekennzeichnet, dass** die Auswerteeinheit (40) beim Auswerten durch einen lagespezifischen Korrekturfaktor berücksichtigt, dass durch die Schwingbewegung des Spiegels (24; 224; 324; 424; 524) verschiedene Punkte der Speicherfolie (12; 212; 312; 412; 512) unterschiedlich oft und/oder unterschiedlich lange abgetastet werden.

8. Vorrichtung nach Anspruch 7, **dadurch gekennzeichnet, dass** die Auswerteeinheit (40) beim Auswerten auf eine Korrekturtabelle (42) zurückgreift, die anhand von Kalibriermessungen erstellt wurde.

9. Vorrichtung nach Anspruch 7 oder 8, **dadurch gekennzeichnet, dass** ein Synchronisierdetektor, vorzugsweise eine Photodiode (51), vorgesehen ist, mit welchem das Ausleselicht (20) an einem vorgegebenen Abtastort detektiert werden kann, um die Auswerteeinheit (40) mit der Bewegung des Spiegels (24) zu synchronisieren.

10. Vorrichtung nach einem der vorhergehenden Ansprüche, **dadurch gekennzeichnet, dass** eine Steuereinheit (38) vorgesehen ist, mit welcher periodische Pulse erzeugbar sind, die den Spiegel (24) zum Schwingen anregen.

11. Vorrichtung nach einem der vorhergehenden Ansprüche, **dadurch gekennzeichnet, dass** die Steuereinheit (38; 138) den Spiegel (24; 224; 324; 424; 524) so ansteuert, dass sich Umkehrpunkte eines schwingenden Ausleselichtstrahls (20), der von dem Ausleselicht gebildet wird, außerhalb der Speicherfolie (12) befinden.

12. Vorrichtung nach einem der vorhergehenden Ansprüche, **dadurch gekennzeichnet, dass** die erste Schwenkachse (30) und die zweite Schwenkachse (32) in einer Ebene liegen.

13. Vorrichtung nach Anspruch 12, **dadurch gekennzeichnet, dass** bei Verwenden einer rechteckigen Speicherfolie die beiden Schwenkachsen (30, 32) parallel zu den Rändern der Speicherfolie angeordnet sind.

14. Vorrichtung nach einem der vorherigen Ansprüche, **dadurch gekennzeichnet, dass** ein maximaler Auslesebereich definiert ist, in welchem die Speicherfolie (212; 312; 412; 512) allein durch Ablenken des Ausleselichts (220; 320; 420; 520) abtastbar ist, und dass eine Löscheinrichtung (266, 268, 269, 270; 368; 472, 474; 572, 574) vorgesehen ist, mit der nach dem Auslesen der Speicherfolie (212; 312; 412; 512) in einem Löschbereich Löschlicht (267; 367) auf die Speicherfolie richtbar ist, wobei der Löschbereich auf der Speicherfolie (212; 312; 412; 512) mindestens so groß wie der Auslesebereich ist.

15. Vorrichtung nach Anspruch 14, **dadurch gekennzeichnet, dass** die Löscheinrichtung (472, 474; 572, 574) mehrere Löschlichtquellen (474; 574), insbesondere Leuchtdioden, umfasst, die um die Speicherfolie (412; 512) herum angeordnet sind.

16. Vorrichtung nach einem der vorhergehenden Ansprüche, **dadurch gekennzeichnet, dass** ein Stützrahmen (576) und ein Klemmelement (578) vorgesehen sind, zwischen welchen die Speicherfolie (512) gehalten wird, wobei diese insbesondere derart ausgestaltet und angeordnet sind, dass der Speicherfolie (512) eine zylindrische Krümmung aufgeprägt wird.

17. Verfahren zum Auslesen einer Speicherfolie (12; 112; 212; 312; 412; 512) mit folgenden Schritten:
a) Bereitstellen einer Lichtquelle (18; 118; 218; 318; 418; 518), einer Ablenkeinheit (26; 126; 226; 326; 426; 526), die einen steuerbaren Mikrospiegel (24; 124, 125; 224; 324; 424; 524) umfasst, und einer Detektoreinheit (36; 136; 236; 436; 536);
b) Erzeugen von Ausleselicht (20; 120, 121; 220; 320; 420; 520) mit der Lichtquelle(18; 118; 218; 318; 418; 518);
c) Sequentielles Abtasten der Speicherfolie (12; 112; 212; 312; 412; 512) mit dem Ausleselicht (20; 120, 121; 220; 320; 420; 520), wobei der Mikrospiegel (24; 124, 125; 224; 324; 424; 524) um zwei voneinander verschiedene Schwenkachsen (30, 32) mit unterschiedlichen Frequenzen schwingt;
d) Detektieren des Fluoreszenzlichts (22; 122; 222; 322; 422; 522), das von der Speicherfolie beim Abtasten mit dem Ausleselicht (20; 120, 121; 220; 320; 420; 520) abgegeben wird;
wobei beim Auswerten von in Schritt d) erzeugten Detektorsignalen berücksichtigt wird, dass durch die Schwingbewegung des Mikrospiegels (24; 224; 324; 424; 524) verschiedene Punkte der Speicherfolie (12; 212; 312; 412; 512) unterschiedlich oft und/oder unterschiedlich lange abgetastet werden.

18. Verfahren nach Anspruch 17, **dadurch gekennzeichnet, dass** sich Umkehrpunkte eines schwingenden Ausleselichtstrahls (20), der von dem Ausleselicht gebildet wird, außerhalb der Speicherfolie (12) befinden.

## Claims

1. Device (10; 110; 210; 310; 410; 510) for reading an exposed imaging plate (12; 112; 212; 312; 412; 512), comprising
a) a light-source (18; 118; 218; 318; 418; 518) configured to generate read-out light (20; 120, 121; 220; 320; 420; 520),
b) a deflection unit (26; 126; 226; 326; 426; 526) configured to direct the read-out light sequentially in a scanning movement over the imaging plate, wherein the deflection unit (26; 126; 226; 326; 426; 526) comprises a controllable mirror (24; 124, 125; 224; 324; 424; 524) for deflecting the read-out light (20; 120, 121; 220; 320; 420; 520),
c) a detector unit (36; 136; 236; 336; 436; 536) for fluorescent light (22; 122; 222; 322; 422; 522) which is emitted from the imaging plate (12; 112; 212; 312; 412; 512) in the course of the scanning with the read-out light (20; 120, 121; 220; 320; 420; 520),
wherein
d) the controllable mirror (24; 124, 125; 224; 324; 424; 524) is a micromirror,
**characterised in that**
e) the mirror (24; 124, 125; 224; 324; 424; 524) is capable of assuming differing angular positions about a first swivel axis (30) and about a second swivel axis (32), which is different from the first swivel axis, that
f) a control unit (38; 138) is provided that is configured to control the mirror (24; 124, 125; 224; 324; 424; 524) such that the mirror oscillates with different frequencies about the two swivel axes (30, 32), and **in that**
g) an evaluating unit (40) is connected to the detector unit (36; 236; 336; 436; 536), said evaluating unit taking into account, in the course of evaluating, the fact that, by virtue of the oscillating motion of the mirror (24; 224; 324; 424; 524), various points of the imaging plate (12; 212; 312; 412; 512) are scanned variably often and/or for variably long times.

2. Device according to claim 1, **characterised in that** the mirror (24; 224; 324; 424; 524) is capable of continuously swivelling about the two swivel axes (30, 32) between two end positions.

3. Device according to any of the preceding claims, wherein the frequencies differ by more than 250 times.

4. Device according to any of the preceding claims, **characterised in that** the mirror (24; 224; 324; 424; 524) has differing natural frequencies about the two swivel axes (30, 32) .

5. Device according to any of the preceding claims, **characterised in that** the control unit (38) is configured to drive the mirror (24; 224; 324; 424; 524) in such a way that a predetermined pattern, in particular a Lissajous figure (50; 250; 350; 450; 550), is scanned on the imaging plate (12; 212; 312; 412; 512) with the read-out light (20; 220; 320; 420; 520) .

6. Device according to Claim 5, **characterised in that** the pattern is determined such that the imaging plate (12; 212; 312; 412; 512) is scanned completely.

7. Device according to any of the preceding claims, **characterised in that** the evaluating unit (40) takes into account, in the course of evaluating, by means of a position-specific correction factor the fact that, by virtue of the oscillating motion of the mirror (24; 224; 324; 424; 524), various points of the imaging plate (12; 212; 312; 412; 512) are scanned variably often and/or for variably long times.

8. Device according to claim 7, **characterised in that** the evaluating unit (40) in the course of evaluating has recourse to a correction table (42) which was created on the basis of calibration measurements.

9. Device according to claim 7 or 8, **characterised in that** a sync detector, preferentially a photodiode (51), is provided, with which the read-out light (20) can be detected at a predetermined scanning location in order to synchronise the evaluating unit (40) with the motion of the mirror (24) .

10. Device according to one of the preceding claims, **characterised in that** a control unit (38) is provided configure to generate periodic pulses which excite the mirror (24) to oscillate.

11. Device according to any of the preceding claims, **characterized in that** the control unit (37; 138) is configured to control the mirror (24; 224; 324; 434; 524) such that reversal-points of an oscillating read-out light beam (20) formed by the read-out light, are arranged outside the imaging plate (12).

12. Device according to any of the preceding claims, **characterised in that** the first swivel axis (30) and the second swivel axis (32) are in one plane.

13. Device according to any of the preceding claims, **characterized in that** the swivel axes (30, 32) are arranged, when using a rectangular imaging plate, parallel to the edges of the imaging plate.

14. Device according to any of the preceding claims, **characterised in that** a maximal read-out region is defined, in which the imaging plate (212; 312; 412; 512) can be scanned solely by deflecting the read-out light (220; 320; 420; 520), and **in that** an erasing appliance (266, 268, 269, 270; 368; 472, 474; 572, 574) is provided, with which erasing light (267; 367) can be directed onto the imaging plate after the reading of the imaging plate (212; 312; 412; 512) in an erasing region, the erasing region on the imaging plate (212; 312; 412; 512) being at least as large as the read-out region.

15. Device according to claim 14, **characterised in that** the erasing appliance (472, 474; 572, 574) comprises a plurality of erasing light sources (474; 574), in particular light emitting diodes, which are arranged around the imaging plate (412; 512).

16. Device according to any of the preceding claims, **characterised in that** a supporting frame (576) and a clamping element (578) are provided between which the imaging plate (512) is held, wherein these are, in particular, configured and arranged in such a manner that a cylindrical curvature is imposed on the imaging plate (512).

17. Method for reading an imaging plate (12; 112; 212; 312; 412; 512), comprising the following steps:
a) providing a light-source (18; 118; 218; 318; 418; 518), a deflection unit (26; 126; 226; 326; 426; 526) which includes a controllable micromirror (24; 124, 125; 224; 324; 424; 524), and a detector unit (36; 136; 236; 436; 536) ;
b) generating read-out light (20; 120, 121; 220; 320; 420; 520) with the light-source (18; 118; 218; 318; 418; 518);
c) sequential scanning of the imaging plate (12; 112; 212; 312; 412; 512) with the read-out light (20; 120, 121; 220; 320; 420; 520), wherein the micromirror (24; 124, 125; 224; 324; 424; 524) swivels with different frequencies about two distinct swivel axes (30, 32);
d) detecting the fluorescent light (22; 122; 222; 322; 422; 522) that is emitted from the imaging plate in the course of the scanning with the read-out light (20; 120, 121; 220; 320; 420; 520);
wherein, during the evaluation of detector signals generated in step d), it is taken into account the fact that, by virtue of the oscillating motion of the micromirror (24; 224; 324; 424; 524), various points of the imaging plate (12; 212; 312; 412; 512) are scanned variably often and/or for variably long times.

18. Method of claim 17, **characterized in that** reversal-points of an oscillating read-out light beam (20) formed by the read-out light are arranged outside the imaging plate (12).

## Revendications

1. Dispositif (10 ; 110 ; 210 ; 310 ; 410 ; 510) de lecture d'un écran à mémoire exposé (12 ; 112 ; 212 ; 312 ; 412 ; 512), comprenant
a) une source lumineuse (18 ; 118 ; 218 ; 318 ; 418 ; 518) avec laquelle une lumière de lecture (20 ; 120, 121 ; 220 ; 320 ; 420 ; 520) peut être générée,
b) une unité de déviation (26 ; 126 ; 226 ; 326 ; 426 ; 526) avec laquelle la lumière de lecture (20 ; 120, 121 ; 220 ; 320 ; 420 ; 520) peut être dirigée séquentiellement sur l'écran à mémoire (12 ; 112 ; 212 ; 312 ; 412 ; 512) pour balayer l'écran à mémoire (12 ; 112 ; 212 ; 312 ; 412 ; 512), l'unité de déviation (26 ; 126 ; 226 ; 326 ; 426 ; 526) comprenant un miroir commandable (24 ; 124, 125 ; 224 ; 324 ; 424 ; 524) pour dévier la lumière de lecture (20; 120, 121 ; 220 ; 320 ; 420 ; 520),
c) une unité de détection (36 ; 136 ; 236 ; 336 ; 436 ; 536) d'une lumière fluorescente (22 ; 122 ; 222 ; 322 ; 422 ; 522) qui est émise par l'écran à mémoire (12 ; 112 ; 212 ; 312 ; 412 ; 512) lors du balayage avec la lumière de lecture (20 ; 120, 121 ; 220 ; 320 ; 420 ; 520),
dans lequel
d) le miroir commandable (24 ; 124, 125 ; 224 ; 324 ; 424 ; 524) est un micromiroir,
**caractérisé en ce que**
e) le miroir (24 ; 124, 125; 224 ; 324 ; 424 ; 524) peut prendre des positions angulaires différentes autour d'un premier axe de pivotement (30) et autour d'un deuxième axe de pivotement (32) différent du premier axe de pivotement (30),
f) une unité de commande (38 ; 138) est prévue, qui commande le miroir (24 ; 224 ; 324 ; 424 ; 524) de telle sorte que le miroir oscille autour des deux axes de pivotement (30, 32) à des fréquences différentes et
g) une unité d'évaluation (40) est reliée à l'unité de détection (36 ; 236 ; 336 ; 436 ; 536), laquelle unité d'évaluation tient compte, lors de l'évaluation, du fait que différents points de l'écran à mémoire (12 ; 212 ; 312 ; 412 ; 512) sont balayés plus ou moins souvent et/ou plus ou moins longtemps en raison du mouvement oscillant du miroir (24 ; 224 ; 324 ; 424 ; 524).

2. Dispositif selon la revendication 1, **caractérisé en ce que** le miroir (24 ; 224 ; 324 ; 424 ; 524) peut pivoter de façon continue entre deux positions extrêmes autour de chacun des deux axes de pivotement (30, 32).

3. Dispositif selon l'une des revendications précédentes, **caractérisé en ce que** les fréquences diffèrent l'une de l'autre de plus de 250 fois.

4. Dispositif selon l'une des revendications précédentes, **caractérisé en ce que** le miroir (24 ; 224 ; 324 ; 424 ; 524) présente des fréquences propres différentes autour des deux axes de pivotement (30, 32).

5. Dispositif selon l'une des revendications précédentes, **caractérisé en ce que** l'unité de commande (38) commande le miroir (24 ; 224 ; 324 ; 424 ; 524) de telle sorte qu'un motif prédéterminé, en particulier une figure de Lissajous (50 ; 250 ; 350 ; 450 ; 550), soit balayé sur l'écran à mémoire (12 ; 212 ; 312 ; 412 ; 512) avec la lumière de lecture (20 ; 220 ; 320 ; 420 ; 520).

6. Dispositif selon la revendication 5, **caractérisé en ce que** le motif est choisi de telle sorte que l'écran à mémoire (12 ; 212 ; 312 ; 412 ; 512) soit complètement balayé.

7. Dispositif selon l'une des revendications précédentes, **caractérisé en ce que** l'unité d'évaluation (40) tient compte, lors de l'évaluation, au moyen d'un facteur de correction spécifique à la position, du fait que différents points de l'écran à mémoire (12; 212; 312; 412; 512) sont balayés plus ou moins souvent et/ou plus ou moins longtemps en raison du mouvement oscillant du miroir (24 ; 224 ; 324 ; 424 ; 524).

8. Dispositif selon la revendication 7, **caractérisé en ce que** l'unité d'évaluation (40) se réfère, lors de l'évaluation, à une table de correction (42) qui a été créée à l'aide de mesures d'étalonnage.

9. Dispositif selon la revendication 7 ou 8, **caractérisé en ce qu'**il est prévu un détecteur de synchronisation, de préférence une photodiode (51), avec lequel la lumière de lecture (20) peut être détectée à un emplacement de balayage prédéfini afin de synchroniser l'unité d'évaluation (40) avec le mouvement du miroir (24).

10. Dispositif selon l'une des revendications précédentes, **caractérisé en ce qu'**il est prévu une unité de commande (38) qui permet de générer des impulsions périodiques qui excitent l'oscillation du miroir (24).

11. Dispositif selon l'une des revendications précédentes, **caractérisé en ce que** l'unité de commande (38 ; 138) commande le miroir (24; 224 ; 324 ; 424 ; 524) de telle sorte que les points d'inversion d'un faisceau lumineux de lecture oscillant (20) formé par la lumière de lecture soient situés à l'extérieur de l'écran à mémoire (12).

12. Dispositif selon l'une des revendications précédentes, **caractérisé en ce que** le premier axe de pivotement (30) et le deuxième axe de pivotement (32) sont situés dans un plan.

13. Dispositif selon la revendication 12, **caractérisé en ce que**, en cas d'utilisation d'un écran à mémoire rectangulaire, les deux axes de pivotement (30, 32) sont disposés parallèlement aux bords de l'écran à mémoire.

14. Dispositif selon l'une des revendications précédentes, **caractérisé en ce qu'**une zone de lecture maximale est définie, dans laquelle l'écran à mémoire (212 ; 312 ; 412 ; 512) peut être balayée uniquement par déviation de la lumière de lecture (220 ; 320 ; 420; 520), et **en ce qu'**un dispositif d'effacement (266, 268, 269, 270 ; 368 ; 472, 474 ; 572, 574) est prévu, avec lequel une lumière d'effacement (267 ; 367) peut être dirigée sur l'écran à mémoire dans une zone d'effacement après la lecture de l'écran à mémoire (212 ; 312 ; 412 ; 512), la zone d'effacement sur l'écran à mémoire (212 ; 312 ; 412 ; 512) étant au moins aussi grande que la zone de lecture.

15. Dispositif selon la revendication 14, **caractérisé en ce que** le dispositif d'effacement (472, 474 ; 572, 574) comprend une pluralité de sources lumineuses d'effacement (474 ; 574), en particulier des diodes électroluminescentes, qui sont disposées autour de l'écran à mémoire (412 ; 512).

16. Dispositif selon l'une des revendications précédentes, **caractérisé en ce qu'**il est prévu un cadre de support (576) et un élément de serrage (578) entre lesquels l'écran à mémoire (512) est maintenu, ceux-ci étant en particulier conçus et disposés de telle sorte qu'une courbure cylindrique soit imprimée à l'écran à mémoire (512).

17. Procédé de lecture d'un écran à mémoire (12 ; 112 ; 212 ; 312 ; 412 ; 512) comprenant les étapes suivantes consistant à :
a) fournir une source lumineuse (18 ; 118 ; 218 ; 318 ; 418 ; 518), une unité de déviation (26 ; 126; 226 ; 326 ; 426 ; 526) qui comprend un micromiroir commandable (24 ; 124, 125 ; 224 ; 324 ; 424 ; 524), et une unité de détection (36 ; 136 ; 236 ; 436 ; 536) ;
b) générer une lumière de lecture (20; 120, 121 ; 220; 320 ; 420; 520) avec la source lumineuse (18; 118; 218; 318; 418; 518) ;
c) balayer séquentiellement l'écran à mémoire (12 ; 112 ; 212 ; 312 ; 412 ; 512) avec la lumière de lecture (20 ; 120, 121 ; 220 ; 320 ; 420 ; 520), le micromiroir (24; 124, 125; 224 ; 324 ; 424 ; 524) oscillant à des fréquences différentes autour de deux axes de pivotement (30, 32) différents l'un de l'autre ;
d) détecter la lumière fluorescente (22 ; 122 ; 222 ; 322 ; 422 ; 522) émise par l'écran à mémoire lors du balayage avec la lumière de lecture (20; 120, 121 ; 220; 320 ; 420; 520) ;
dans lequel, lors de l'évaluation des signaux de détecteur générés à l'étape d), il est tenu compte du fait que différents points de l'écran à mémoire (12; 212; 312; 412; 512) sont balayés plus ou moins souvent et/ou plus ou moins longtemps en raison du mouvement oscillant du micromiroir (24; 224 ; 324 ; 424 ; 524).

18. Procédé selon la revendication 17, **caractérisé en ce que** les points d'inversion d'un faisceau de lumière de lecture oscillant (20) formé par la lumière de lecture sont situés à l'extérieur de l'écran à mémoire (12).
